Europäisches Patentamt

European Patent Office

Office européen des brevets

(11) Veröffentlichungsnummer: **0 458 118 A2**

# (12) EUROPÄISCHE PATENTANMELDUNG

(21) Anmeldenummer: 91107351.8

(22) Anmeldetag: 07.05.91

(51) Int. Cl.5: **B65G 45/16**

(30) Priorität: 19.05.90 DE 9005724 U
30.11.90 DE 4038187

(43) Veröffentlichungstag der Anmeldung:
27.11.91 Patentblatt 91/48

(84) Benannte Vertragsstaaten:
**DE FR GB**

(71) Anmelder: **Walter Becker GmbH**
**Barbarastrasse 12**
**W-6605 Friedrichsthal (Saar)(DE)**

(72) Erfinder: **Lorenz, Peter, Prof. Dr.-Ing.**
**Keplerstrasse 6**
**W-6600 Saarbrücken(DE)**
Erfinder: **Jungen, Klaus**
**Abteistrasse 11**
**W-6695 Tholey(DE)**
Erfinder: **Huwer, Hans Werner**
**Im Schützenrech 47**
**W-6580 Idar-Oberstein(DE)**

(74) Vertreter: **Bernhardt, Winfrid, Dr.-Ing.**
**Kobenhüttenweg 43**
**W-6600 Saarbrücken(DE)**

(54) **Abstreifer für ein Förderband.**

(57) Bei einem Abstreifer für ein Förderband (2) mit einer an das Förderband (2) angedrückten, aus einer Normalstellung in Förderbandlaufrichtung herausschwenkbaren Abstreifleiste (5) ist die Abstreifleiste (5) zusätzlich zu der Schwenkbarkeit radial zu der Schwenkachse (11) gefedert, wie in der Zeichnung rechts durch den Doppelpfeil angedeutet.

Die Abstreifleiste kann sich also beim Herausschwenken aus ihrer, vorzugsweise senkrechten, Normalstellung heraus in Radialrichtung ausdehnen, und dabei läßt die Federkraft nach und damit die Anpreßkraft.

Die Anpreßkraft in der Normalstellung kann, anders als bei den bekannten radial gefederten nicht schwenkbaren Leisten, ohne größere Berücksichtigung der an sich vorhandenen Ausweichmöglichkeit der gefederten Abstreifleiste in Radialrichtung auf das Abschaben hin optimiert werden. Die die Abstreifleiste gegen das Schwenken haltende Kraft kann, anders als bei den bekannten schwenkbaren Abstreifleisten, ohne Rücksicht auf die erforderliche Anpreßkraft auf das Ausweichen hin optimiert werden.

Das Herausschwenken aus der Normalstellung kann verhältnismäßig weich und bandschonend eingestellt werden.

EP 0 458 118 A2

Die Erfindung betrifft einen Abstreifer für ein Förderband mit einer an das Förderband angedrückten, aus einer Normalstellung in Förderbandlaufrichtung herausschwenkbaren Abstreifleiste.

Die bekannten Abstreifleisten dieser Art werden durch ein mit einem Hebelarm an ihrer Schwenkachse angreifendes Gewicht oder durch eine entsprechend angreifende Feder in schräger Stellung an das Förderband gedrückt. Diese Normalstellung in Laufrichtung schräg nach hinten ist nicht so wirksam wie die schräge Anstellung starrer Abstreifleisten nach vorne, aber weniger gefährlich für das Band. Trotzdem kann es aber auch hier noch zu Beschädigungen des Bandes kommen, wenn dickere Schmutzteile besonders fest an ihm haften oder das Band unterschiedliche Dicken hat, wie an Vulkanisierstellen oder Verbindungen. Eine Ursache dafür liegt darin, daß beim Schwenken der Abstreifleiste die genannte Feder weiter angespannt und damit die Anpreßkraft verstärkt wird bzw. das genannte Gewicht eine gleichbleibende Anpreßkraft erzeugt.

Der Erfindung liegt die Aufgabe zugrunde, einen Abstreifer der eingangs bezeichneten Art zu schaffen, dessen Anpreßkraft sich beim Herausschwenken aus der Normalstellung verringert.

Gemäß der Erfindung wird dieser Zweck in der Weise erfüllt, daß die Abstreifleiste zusätzlich zu der Schwenkbarkeit radial zu der Schwenkachse gefedert ist.

Die Abstreifleiste kann sich beim Herausschwenken aus ihrer Normalstellung in Radialrichtung ausdehnen, und dabei läßt die Federkraft nach und damit die Anpreßkraft.

Von besonderem Vorteil ist aber darüberhinaus die mit der Erfindung gegebene Möglichkeit, die Abstreifleiste in der Normalstellung senkrecht zur Förderbandebene zu stellen: Da die Federung radial zu der Schwenkachse vorhanden ist, kann sie die Anpreßkraft erzeugen. Es bedarf dazu nicht des Drehmoments der Schwenkachse aus einem mit einem Hebelarm angreifenden Gewicht oder einer die Abstreifleiste gegen die Verschwenkung haltenden Feder. Die senkrechte Anstellung der Abstreifleiste an dem Förderband hat eine stärkere Schabwirkung als die Anstellung schräg nach hinten. Die Anpreßkraft in der Normalstellung kann, anders als bei den bekannten radial gefederten nicht schwenkbaren Leisten, ohne größere Berücksichtigung der an sich vorhandenen Ausweichmöglichkeit der gefederten Abstreifleiste in Radialrichtung auf das Abschaben hin optimiert werden. Die die Abstreifleiste gegen das Schwenken haltende Kraft kann, anders als bei den bekannten schwenkbaren Abstreifleisten, ohne Rücksicht auf die erforderliche Anpreßkraft auf das Ausweichen hin optimiert werden. Das Herausschwenken aus der Normalstellung kann verhältnismäßig weich eingestellt werden.

Ein besonderer Vorteil dieses Bandabstreifers gegenüber anderen Konstruktionen liegt auch in seiner Einsatzmöglichkeit unmittelbar an einer Umlenkrolle, wo die Fliehkraft das Entfernen des Schmutzes unterstützt.

Die Abstreifleiste kann in der Normalstellung einfach dadurch gehalten werden, daß sie in dieser durch eine bei der Schwenkung angespannte Feder an einen Anschlag angedrückt ist.

Um die radiale Federung der Abstreifleiste weiter ihren Zwecken entsprechend auszugestalten, wird vorgeschlagen, daß die Abstreifleiste eine Aufteilung in einzeln federnde Segmente aufweist, die vorzugsweise Zwischenstücke zwischen einem Federelement, vorzugsweise einem gemeinsamen Luftfederkissen, und einem gemeinsamen, in Schlitze der Zwischenstücke eingesetzten, elastischen Abstreifblatt sind.

Die Zeichnung gibt ein Ausführungsbeispiel der Erfindung wieder.

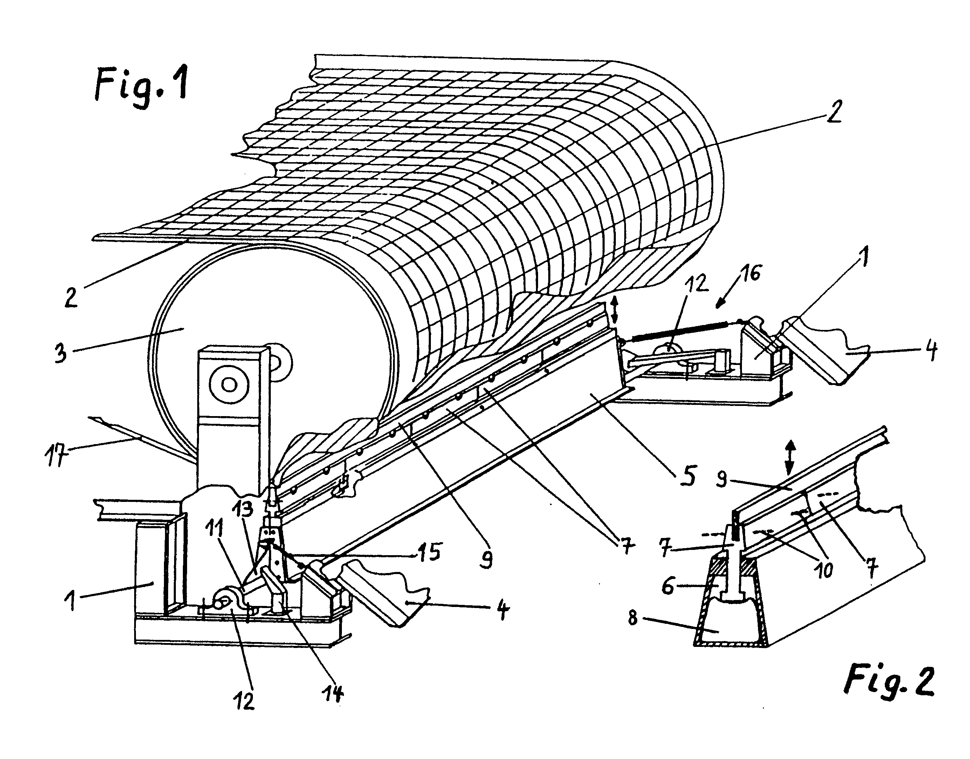

Fig. 1  zeigt einen Abstreifer an der Abwurfrolle eines Förderbandes in perspektivischer Darstellung,

Fig. 2  zeigt eine Einzelheit des Abstreifers in entsprechender perspektivischer Darstellung in etwas größerem Maßstab und geschnitten.

Auf einem Tragrahmen 1 läuft ein Förderband 2 über seine Abwurfrolle 3. Eine Schurre 4, auf die das Material fällt, ist nur in kleinen Ausschnitten dargestellt.

An der untersten Mantellinie der Abwurfrolle 3 liegt an dem Förderband eine Abstreifleiste 5 an. Wie in Fig. 2 dargestellt, hat sie folgenden Aufbau:

Ein langgestreckter Kasten 6 von schmalem, trapezförmigem Querschnitt ist in seiner auf der kürzeren Parallelseite des Trapezes liegenden Decke in Längsrichtung geschlitzt. Durch die Schlitze ragen als Segmente aneinandergereihte, auf ein im Kasten 6 angeordnetes, gemeinsames Luftfederkissen 8 abgestützte und oben ein wiederum gemeinsames Abstreifblatt 9 tragende Zwischenstücke 7. Das Abstreifblatt 9 aus einem harten Gummi oder anderem elastischen Material sitzt jeweils in einem Schlitz der Zwischenstücke 7 und ist darin durch bei 10 angedeutete Schrauben gehalten.

Die Abstreifleiste 5 ist mit zwei Achsschenkeln 11, die sie an ihren beiden Enden fortsetzen, in Lagern 12 schwenkbar gelagert. In der gezeichneten, senkrechten Normalstellung der Abstreifleiste 2 liegt eine an deren Stirnseite sowie auf dem Achsschenkel 11 befestigte Scheibe 13 an einem am Tragrahmen befestigten Anschlag 14 an unter der Kraft einer Zugfeder 15, die einerseits an der Abstreifleiste 5 und andererseits am Tragrahmen 1 befestigt ist. Am anderen Ende der Abstreifleiste 5 ist eine in den Einzelheiten andere, im funktionellen Ergebnis aber gleiche Anordnung 16 getroffen.

Das Abstreifblatt 9 schabt mit seiner Kante an dem Förderband 2 haften gebliebenes Material ab. Sitzen Teile des Material zu fest, kann das Abstreifblatt 9 durch Zusammendrücken des Luftfederkissens 8 im Bereich des jeweiligen Zwischenstückes 7 nach unten zurückweichen. Vor allem aber kann die Abstreifleiste 5 im ganzen durch Verschwenken in der Bandlaufrichtung nachgeben. Dabei drehen sich die Achsschenkel 11 in den Lagern 12, die Scheibe 13 hebt von dem Anschlag 14 ab und die Zugfeder 15 wird stärker angespannt. Zugleich aber läßt die von dem Luftfederkissen 8 ausgeübte Anpreßkraft nach, weil sich infolge der Schrägstellung das Abstreifblatt 9 weiter herausschieben kann und sich das Luftfederkissen 8 dadurch entspannt. Dieser Vorgang ist in dem dargestellten Beispiel insofern noch etwas ausgeprägter, als der untere Trum 17 des Förderbandes 2 weiter als bis zur untersten Mantellinie um die Abwurfrolle 3 herumgeführt ist und sich dadurch in Laufrichtung auch noch nach oben von der durch die Achsschenkel 11 gebildeten Schwenkachse der Abstreifleiste 5 entfernt.

**Patentansprüche**

1. Abstreifer für ein Förderband (2) mit einer an das Förderband (2) angedrückten, aus einer Normalstellung in Förderbandlaufrichtung herausschwenkbaren Abstreifleiste (5), dadurch gekennzeichnet, daß die Abstreifleiste (5) zusätzlich zu der Schwenkbarkeit radial zu der Schwenkachse (11) gefedert (8) ist.

2. Abstreifer nach Anspruch 1, dadurch gekennzeichnet, daß die Abstreifleiste (5) in der Normalstellung senkrecht zur Förderbandebene steht.

3. Abstreifer nach Anspruch 1 oder 2, dadurch gekennzeichnet, daß die Abstreifleiste (5) in der Normalstellung, vorzugsweise durch eine bei der Schwenkung angespannte Feder (15), an einen Anschlag (14) angedrückt ist.

4. Abstreifer nach einem der Ansprüche 1 bis 3, dadurch gekennzeichnet, daß die Abstreifleiste (5) durch ein Luftfederkissen (8) gefedert ist.

5. Abstreifer nach einem der Ansprüche 1 bis 4, dadurch gekennzeichnet, daß die Abstreifleiste (5) eine Aufteilung in einzeln federnde Segmente (7) aufweist.

6. Abstreifer nach Anspruch 5, dadurch gekennzeichnet, daß die Segmente Zwischenstücke (7) zwischen einem Federelement (8), vorzugsweise einem gemeinsamen Luftfederkissen (8), und einem gemeinsamen, in Schlitze der Zwischenstücke (7) eingesetzten, elastischen Abstreifblatt (9) sind.

7. Abstreifer nach Anspruch 6, dadurch gekennzeichnet, daß die Zwischenstücke (7) auf und ab verschiebbar in einem Schlitz in der Wandlung eines langgestreckten Kastens (6) sitzen, in dem ihr Federelement (8), vorzugsweise in der Form des gemeinsamen Luftfederkissens (8), gehalten ist.

Fig.1

Fig.2

EP 0 458 118 A2